# EUROPÄISCHE PATENTSCHRIFT

(11) **EP 3 722 620 B1**
(45) Veröffentlichungstag und Bekanntmachung des Hinweises auf die Patenterteilung: **29.06.2022**
(21) Anmeldenummer: 20168401.6
(22) Anmeldetag: 07.04.2020
(51) Int. Cl.: F15B 15/14, F15B 15/26, B23Q 1/28, E21B 43/00, F16L 37/62, F16L 1/26, F16L 23/24

(54) **HYDRAULISCH BETÄTIGTE UNTERSEE-KLEMMZYLINDER MIT KRAFTHALTUNG**
HYDRAULICALLY ACTUATED SUBMERSIBLE CLAMPING CYLINDER WITH FORCE RETENTION
CYLINDRE DE SERRAGE SOUS-MARIN À ACTIONNEMENT HYDRAULIQUE EN PUISSANCE

(30) Priorität: 12.04.2019 DE 102019205294
(43) Veröffentlichungstag der Anmeldung: 14.10.2020
(73) Patentinhaber: Robert Bosch GmbH, 70442 Stuttgart (DE)
(72) Erfinder: Arnold, Bernhard, 97849 Roden-Ansbach (DE); Junker, Markus, 63801 Kleinostheim (DE)

(56) Entgegenhaltungen:
- WO-A1-03/093680
- WO-A1-2014/127955
- WO-A1-2018/014996
- DE-A1- 3 535 193
- US-A- 2 753 036

## Beschreibung

### geänderte Beschreibung

Die Erfindung betrifft einen hydraulisch betätigten Untersee-Klemmzylinder mit einer elastischen Funktion bzw. mit einer Elastizität für eine lang dauernde Krafthaltung gemäß dem Oberbegriff des Patentanspruchs 1.

Bei der Förderung von Erdöl im Meer ist es erforderlich Verbindungsstellen von Förderleitungen über beidseitige große Flansche zu verbinden. Diese dienen zur Übertragung der Längskräfte. Die Flansche können z.B. durch Hydraulikzylinder zusammengezogen oder zusammengedrückt, also geklammert, und dann geklemmt werden. Mehrere dieser Hydraulikzylinder werden am Umfang der Flansche verteilt. Aufgrund der Einbaulage einige 100 m unter der Wasseroberfläche wird gefordert, dass nach dem Verspannen der Flansche die der Versorgung dienenden Hydraulikleitungen entfernen zu können und eine ausreichende Verspannung über einen sehr langen Zeitraum (z.B. 20 Jahre) zu gewährleisten.

Aufgrund der langen Betriebsdauer und den schwellenden Belastungen durch die Erdölförderprozesse und Meeresströmungen ist ein Setzeffekt zu erwarten, welcher zu einem Spiel und damit einer Bewegung zwischen den beiden Flanschen führt, was zu vermeiden ist.

In der Druckschrift DE 10 2015 218 418 A1 ist eine hydraulisch betätigter Untersee-Klemmzylinder offenbart, welcher eine auf Druck belastete zweigeteilte Kolbenstange hat. Zwischen den beiden Teilen der Kolbenstange ist ein Tellerfederpaket eingespannt, das auch nach dem Entfernen der hydraulischen Versorgung die nötige Elastizität der auf Druck belasteten Kolbenstangen und damit der Klammerung sicherstellt. Dabei ist für das dauerhafte Festhalten der Kolbenstange eine Festhalteeinrichtung vorgesehen.

Derartige Untersee-Klammern haben den Nachteil, dass sie sehr aufwändig und großvolumig ausgeführt sind.

Die WO 2018/014996 offenbart einen Untersee-Klemmzylinder, der als Differenzialzylinder gebildet ist, dessen Kolbenbodenraum in einen vergleichsweise großvolumigen Gasdruckraum und einen Druckraum für zähes Öl unterteilt ist.

Die Aufgabe der Erfindung ist es, eine einfach herzustellende und technisch sichere Untersee-Klammer zur Verfügung zu stellen, welche die Teilaufgaben:
- Flansche klammern (zusammenziehen oder zusammendrücken)
- Kraft aufbauen (Klemmkraft erzeugen)
- Klemmkraft dauerhaft aufrechthalten
auf einfache, kostengünstige und sichere Art und Weise erfüllt.

Dabei sollen sich bezüglich Korrosionsschutz und wegen des Druckausgleichs auch bezüglich der mechanischen Auslegung große Vorteile ergeben.

Diese Aufgabe wird gelöst durch einen Untersee-Klemmzylinder mit den Merkmalen des Patentanspruchs 1. Weitere vorteilhafte Ausgestaltungen der Erfindung sind in den abhängigen Patentansprüchen beschrieben.

Die Erfindung baut auf den grundsätzlichen Eigenschaften eines mit einer Druckflüssigkeit (vorzugsweise Hydrauliköl) betriebenen Zylinders, vorzugsweise Differenzialzylinder, auf. Mit einem solchen Zylinder wird über einfache Weise das Klammern (durch die Längsbewegung einer Kolbenstange) und der Aufbau der erforderlichen Klemmkraft durch den Druck der Druckflüssigkeit erreicht. Dazu hat der beanspruchte Untersee-Klemmzylinder einen Differenzialzylinder, dessen Kolbenbodenraum zum Aufbringen einer Klemmkraft mit der Druckflüssigkeit befüllbar ist. Dabei ist der Kolbenbodenraum von einem Kolben begrenzt, an dem eine Kolbenstange befestigt ist, die direkt über ihren Endabschnitt oder indirekt über ein daran befestigtes Spannelement an einen zu bewegenden und zu spannenden oder zu klammernden Flansch anlegbar ist. Damit ist eine starre - ggf. sogar einstückige - Verbindung vom Kolben bis zum am Flansch anliegenden Endabschnitt oder Spannelement gegeben. Erfindungsgemäß wird die geforderte Elastizität durch die im Kolbenbodenraum eingesperrte Druckflüssigkeit an den Kolben und von diesem direkt weiter an den am Flansch anliegenden Endabschnitt oder das am Flansch anliegende Spannelement übertragen. Die über Jahre sichere Klemmkrafthaltung wird durch eine ausreichend dimensionierte Elastizität der Klemmung erreicht.

Die Elastizität wird beim beanspruchten Untersee-Klemmzylinder zumindest teilweise mittels einer Fluidfeder erzeugt, also mittels eines Volumens, das mit einem Gas befüllt ist.

Das mit Gas gefüllte Volumen ist erfindungsgemäß in einem Blasenspeicher angeordnet, der mit dem Kolbenbodenraum verbunden ist. Bei der erfindungsgemäßen Ausgestaltung mit dem Differenzialzylinder ist der Blasenspeicher in der Verlängerung dessen Kolbenbodenraums aufgenommen.

Das mit Gas gefüllte Volumen kann bei einem nicht zur Erfindung gehörenden Beispiel in einem Kolbenspeicher angeordnet sein. An einer vom Gas abgewandten Seite des Kolbens liegt die in dem Zylinderraum eingesperrte Druckflüssigkeit an. Dabei ergibt sich der Vorteil, dass die Dichtung des Kolbens im Betrieb nicht gegen eine Druckdifferenz abdichten muss, da der Druck des Gases dem der Druckflüssigkeit entspricht.

Die Elastizität ist erfindungsgemäß in einer Verlängerung des Kolbenbodenraumes realisiert. Die Verlängerung erstreckt sich in Bewegungsrichtung des Kolbens bei Öffnung der Klammer und geht über einen Hubweg des Kolbens hinaus. Die Verlängerung kann ein Mehrfaches des Hubweges des Kolbens betragen, z.B. das Dreifache des Hubweges.

Durch die Integration in dem Bereich des nicht für den Hub genutzten Kolbenbodenraumes ergeben sich bezüglich Korrosionsschutz und wegen des Druckausgleichs auch bezüglich der mechanischen Auslegung große Vorteile.

Die Elastizität kann auch teilweise im Innern des Kolbens und / oder der Kolbenstange erzeugt sein.

Wenn ausreichend Bauraum zur Verfügung steht, kann auch die Elastizität durch eine Verlängerung der Kolbenstange bzw. des Kolbenrohres entsprechend vergrößert werden.

Wenn bei dem nicht zur Erfindung gehörenden Beispiel der Kolbenspeicher mit seinem Volumen und mit seinem Kolben zur Erzeugung der Elastizität im Innern des Kolbens und / oder der Kolbenstange angeordnet sind, werden diese zumindest teilweise bauraumsparend untergebracht. Dann kann der Differenzialzylinder gegenüber einem Differenzialzylinder aus dem Stand der Technik bauraumneutral sein.

Bei anderen nicht zur Erfindung gehörenden Weiterbildungen des hydraulisch betätigten Untersee-Klemmzylinders ist die Elastizität teilweise durch eine mechanische Feder erzeugt.

Insbesondere wenn die mechanische Feder eine Schraubenfeder ist, wird es bevorzugt, wenn deren Federkraft über einen Kolben an das im Kolbenbodenraum eingesperrte Druckmittel übertragbar ist.

Wenn die mechanische Feder und der Kolben zur Erzeugung der Elastizität im Innern des Kolbens und / oder der Kolbenstange angeordnet sind, werden diese zumindest teilweise bauraumsparend untergebracht. Dann kann der Differenzialzylinder gegenüber einem Differenzialzylinder aus dem Stand der Technik bauraumneutral sein.

Bei einer Weiterbildung ist die mechanische Feder dadurch gebildet, dass in der über den Hubweg des Zylinders hinausgehenden Verlängerung des Zylinders eine elastische Wand des Zylinders angeordnet ist. Diese kann durch einen Materialwechsel und oder durch eine Verringerung der Wandstärke gegenüber dem Hubweg realisiert sein.

Besonders sicher ist die lange dauernde elastische Krafthaltung des erfindungsgemäßen Untersee-Klemmzylinders, wenn der Kolben zwei axial zueinander beabstandete Dichtungen aufweist.

Das dauerhafte sichere Einsperren der Druckflüssigkeit kann erreicht werden durch redundante Dichtungen unter Verwendung von unterschiedlichen Dichtungsvarianten (z.B. Nutring in Kombination mit O-Ring/Stützring). Weiterhin sind besonders bearbeitete Dichtflächen erforderlich, welche eine geringe Rautiefe garantieren.

Die redundanten Dichtungen sollten vorzugsweise z.B. so ausgebildet werden, dass die Primärdichtung folgender Maßen ausgebildet ist: Kontaktflächen der Dichtung aus einem Werkstoff, welcher besonders gut die Abdichtung zu den Gegenflächen sicherstellt. D.h. Kontaktfläche sollte sich möglichst gut an die Gegenfläche anschmiegen. Die Pressung an der Dichtfläche kann durch eine entsprechende Druckaktivierungskraft mit einem Sicherheitsfaktor (z.B. > 1,5) ausgelegt werden.

Die Sekundärdichtung kann durch die Auswahl eines geeigneten Dichtungstyps und Werkstoffs (Elastomerwerkstoff) auf besonders gute Dichteigenschaften ausgelegt werden. Besonders geeignet erscheint hierbei ein sogenannter AQ-Seal (Fa. Trelleborg) eine Kombination eines Elastomerdichtrings mit einem zweiten extrusions- und verschleißbeständigeren Werkstoff.

Besonders sicher ist die lange dauernde elastische Krafthaltung der erfindungsgemäßen Untersee-Klammer, wenn die Druckflüssigkeit über zwei in einer Zuleitung angeordnete und zueinander in Reihe geschaltete als Sitzventile ausgebildete Sperrventile im Kolbenbodenraum eingesperrt ist. Bevorzugt werden Rückschlagventile, deren jeweilige Schließrichtung vom Kolbenbodenraum nach außen gerichtet ist.

Diese Sitzventile haben vorzugsweise einen für eine absolute Dichtheit optimiert feinstbearbeiteter Dichtsitz in Kombination mit einem weichen Schließkörper. Dieser Schließkörper kann z.B. aus hochfestem Kunststoff oder aus einem mit Elastomer beschichtetem Stahlkörper hergestellt sein.

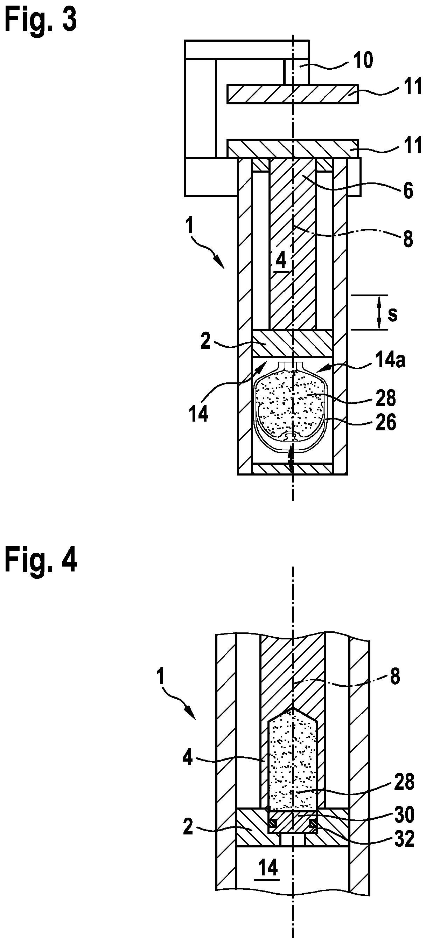

Ein Ausführungsbeispiel des erfindungsgemäßen Untersee-Klemmzylinders ist in Figur 3 dargestellt. Es zeigen
Figur 1 in einem Längsschnitt einen Untersee-Klemmzylinder gemäß einem nicht zur Erfindung gehörenden Beispiel im geöffneten Zustand,
Figur 2 in einem Längsschnitt einen Untersee-Klemmzylinder gemäß einem nicht zur Erfindung gehörenden Beispiel im geschlossenen Zustand,
Figur 3 in einem Längsschnitt den erfindungsgemäßen Untersee-Klemmzylinder gemäß dem Ausführungsbeispiel im geöffneten Zustand,
Figur 4 einen Ausschnitt eines nicht zur Erfindung gehörenden Beispiels eines Untersee-Klemmzylinders,
Figur 5 einen Ausschnitt eines nicht zur Erfindung gehörenden Beispiels eines Untersee-Klemmzylinders, und
Figur 6 einen Ausschnitt eines nicht zur Erfindung gehörenden Beispiels eines Untersee-Klemmzylinders.

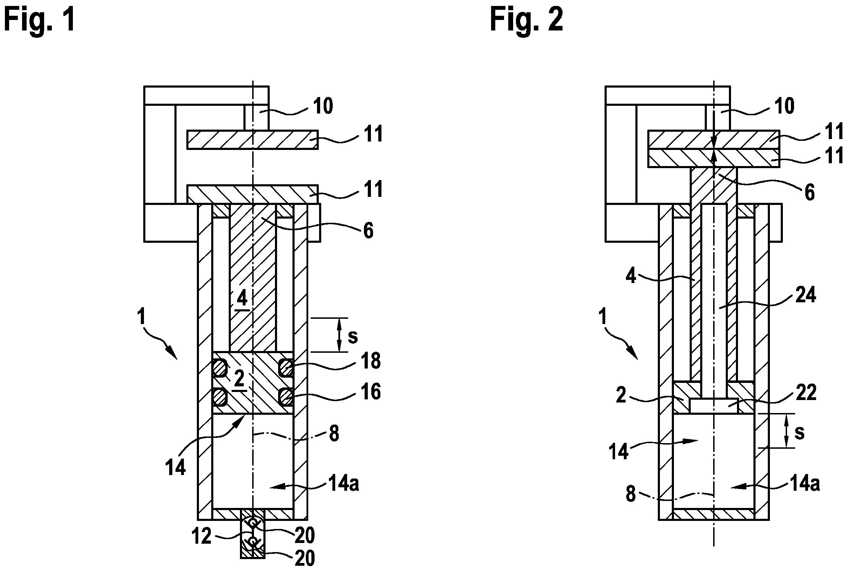

Figur 1 zeigt in einem Längsschnitt einen nicht zur Erfindung gehörenden Untersee-Klemmzylinder. Er hat einen Differentialzylinder 1 mit einem beweglichen Kolben 2, an dem einseitig eine Kolbenstange 4 befestigt ist. Der vom Kolben 2 abgewandte Endabschnitt 6 der Kolbenstange 4 kann entlang einer Längsachse 8 des Untersee-Klemmzylinders bzw. insbesondere seines Differentialzylinders 1 gegen ein ruhendes Spannelement 10 bewegt und mit Klemmkraft beaufschlagt werden. "Ruhend" bedeutet hier nicht zwingend "ortsfest", sondern, dass diese Spannelement 10 am Zylindermantel des Differentialzylinders 1 befestigt ist.

Zwei einander gegenüberliegenden Flansche 11 zweier zu verbindender Förderleitungen (kann Öl für oder Gas sein) werden zwischen dem Endabschnitt 6 der Kolbenstange 4 und das Spannelement 10 geführt. Dann wird über eine Zuleitung 12 Druckflüssigkeit, vorzugsweise Hydrauliköl, in einen Kolbenbodenraum 14 des Differentialzylinders 1 gepumpt. Dadurch verfährt der Kolben 2 entlang der Längsachse 8 um den Hubweg s (in Figur 1 nach oben) und presst über die Kolbenstange 4 und deren Endabschnitt 6 die beiden Flansche 11 gegen das ruhende Spannelement 10 und somit zusammen.

Damit diese Klemmung auch über viele Jahre (z. B. 20 Jahre) erhalten bleibt, ist der Kolbenbodenraum 14 besonders gut abgedichtet. Dazu sind am Kolben 2 redundante Dichtungen, genauer gesagt eine Primärdichtung 16 und eine Sekundärdichtung 18 vorgesehen. Die Kontaktflächen der Primärdichtung 16 sind aus einem Werkstoff, der besonders gut die Abdichtung zu den Gegenflächen sicherstellt. Die Kontaktfläche soll sich möglichst gut an die Gegenfläche anschmiegen. Die Pressung an der Dichtfläche ist durch eine entsprechende Druckaktivierungskraft mit einem Sicherheitsfaktor vorzugsweise ≥ 1,5 ausgelegt. Die Sekundärdichtung 18 ist bei diesem Ausführungsbeispiel als sogenanntes AQ-Seal der Firma Treleborg ausgestaltet. Dies ist eine Kombination eines Elastomerdichtrings mit einem zweiten extrusions- und verschleißbeständigerem Werkstoff.

Damit diese Klemmung auch über viele Jahre (z. B. 20 Jahre) erhalten bleibt, ist weiterhin die dauerhafte Absperrung der Zuleitung 12 über zwei zueinander in Reihe geschaltete Sitzventile 20 realisiert. Diese sind als Rückschlagventile ausgebildet, deren Öffnungsrichtung von außen in Richtung zum Kolbenbodenraum 14 gerichtet ist. Die beiden Sitzventile 20 haben einen für eine absolute Dichtheit optimiert feinst bearbeiteten Dichtsitz in Kombination mit einem weichen Schließkörper. Der Schließkörper der beiden Sitzventile 20 ist aus hochfestem Kunststoff oder aus einem mit Elastomer beschichtetem Stahlkörper hergestellt.

Eine lange andauernde (z. B. 20 Jahre dauernde) Elastizität der Klemmung der beiden Flansche 11 zwischen dem Endabschnitt 6 der Kolbenstange 4 und dem Spannelement 10 wird beim ersten Ausführungsbeispiele gemäß Figur dadurch erreicht, dass der Zylindermantel des Differentialzylinders 1 (in Figur 1 nach unten) verlängert ist. Über diese Verlängerung 14a zusätzlich zum Hubweg s des Kolbens 2 ergibt sich eine Vergrößerung des Kolbenbodenraums 14. Die Verlängerung 14a des Kolbenbodenraums 14 wird vom Kolben 2 nie überfahren. Daher steht auch im (in Figur 1 gezeigten) geöffneten Zustand des Untersee-Klemmzylinders das so geschaffene zusätzliche Volumen stets zur Realisierung der dauerhaften Elastizität für die Klemmkrafthaltung zur Verfügung. Genauer gesagt sorgt die vergleichsweise geringe Kompressibilität der Druckflüssigkeit in Verbindung mit dem vergleichsweise großen zusätzlichen Volumen für eine gewisse Elastizität, die für die elastische Kompensation z.B. von Setzerscheinungen ausreicht.

Figur 2 zeigt in einem Längsschnitt eine nicht zur Erfindung gehörende Untersee-Klammer im geschlossenen Zustand. Dabei ist (abweichend von Figur 1) der zusammengepresste und elastisch geklammerte Zustand der beiden Flansche 11 gezeigt. Daher ist der Kolben 2 in seiner in Figur 2 oberen Position am Ende des Hubwegs s gezeigt.

Nicht nur die Druckflüssigkeit im Volumen der Verlängerung 14a, sondern auch die Druckflüssigkeit im zuvor vom Kolben 2 überfahrenen Kolbenbodenraum 14 trägt im geschlossenen Zustand der Untersee-Klammer zur dauerhaften Elastizität der Klammerung bei.

Darüber hinausgehend ist beim zweiten Ausführungsbeispiel gemäß Figur 2 eine ergänzende Elastizität dadurch geschaffen, dass der Kolben 2 und die Kolbenstange 4 hohl sind. Die entsprechenden Hohlräume 22, 24 bilden ergänzende Volumina für die Druckflüssigkeit, so dass die Elastizität bei der Untersee-Klammer gemäß Figur 2 durch eine Fluidfeder gebildet ist, die aus einer Befüllung des Kolbenbodenraums 14 mit seiner Verlängerung 14a und darüber hinaus des Hohlraums 22 des Kolbens 2 und des Hohlraums 24 der Kolbenstange 4 mit der Druckflüssigkeit gebildet ist.

Abweichend von den in Figuren 1 und 2 gezeigten Fluidfedern mittels der Druckflüssigkeit zeigen die Figuren 3 und 4 Fluidfedern für die dauerhafte Bereitstellung der Elastizität mittels Gas.

Bei dem in Figur 3 gezeigten Ausführungsbeispiel der Erfindung ist (ähnlich wie in den Figuren 1 und 2) eine Verlängerung 14a des Kolbenbodenraums 14 vorgesehen. In diese Verlängerung 14a ist ein Blasenspeicher 26 eingesetzt, dessen Membran ein mit Gas gefülltes Volumen 28 von einem Bereich des Blasenspeichers 26 trennt, der direkt mit der Druckflüssigkeit des Kolbenbodenraums 14 bzw. dessen Verlängerung 14a verbunden und beaufschlagt ist.

Durch diese Integration des Blasenspeichers 26 in die Verlängerung 14a des Kolbenbodenraumes 14 wird ein sehr großes Ausgleichsvolumen realisiert und es ergeben sich Vorteile bezüglich Korrosionsschutz und bezüglich der mechanischen Auslegung wegen des Druckausgleichs.

Figur 4 zeigt einen Ausschnitt einer nicht zur Erfindung gehörenden Untersee-Klammer. Die dauerhafte Elastizität ist (prinzipiell ähnlich der Figur 3) über ein mit Gas gefülltes Volumen 28 realisiert. Abweichend vom Ausführungsbeispiel gemäß Figur 3 ist die so gebildete Gasdruckfeder komplett im Innern der Kolbenstange 4 und des Kolbens 2 des Differentialzylinders 1 aufgenommen. Genauer gesagt ist das mit Gas gefüllte Volumen 28 im Wesentlichen in der Kolbenstange 8 angeordnet, während ein als Trennelement dienender Kolben 30 konzentrisch entlang der Längsachse 8 im Kolben 2 des Differentialzylinders 1 verschiebbar aufgenommen ist.

In Figur 4 ist die entspannte oder minimal gespannte Ausgangsstellung der so gebildeten Gasdruckfeder gezeigt, bei der der Kolben 30 an einem Anschlagring 32 des Kolbens 2 anliegt. Wenn die beiden (in Figur 4 nicht gezeigten) Flansche 11 gegeneinander gespannt sind und sich entsprechend der Druck der Druckflüssigkeit im Kolbenbodenraum 14 erhöht, hebt der Kolben 30 vom Anschlag 32 ab und ermöglicht so die geforderte dauerhafte Elastizität.

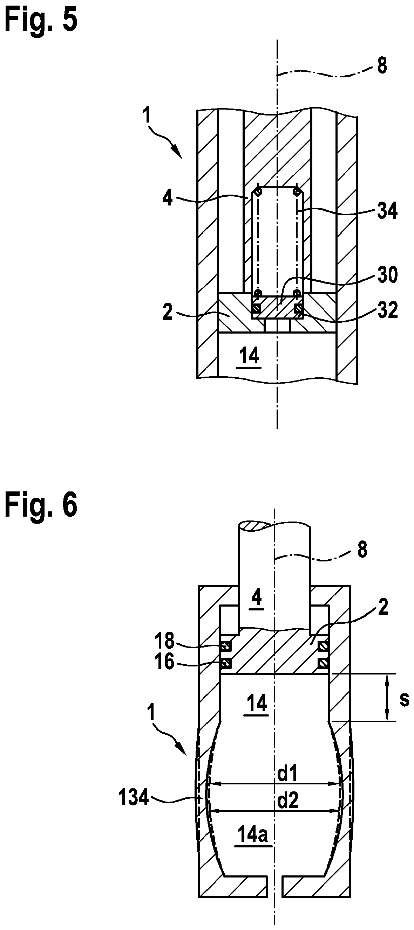

Figuren 5 und 6 zeigen Beispiele, bei denen die Elastizität (zumindest teilweise) über eine mechanische Feder realisiert ist.

Figur 5 zeigt eine Schraubenfeder 34, die konzentrisch zur Längsachse 8 im Wesentlichen im Innern der Kolbenstange 4 aufgenommen ist, und einen Kolben 32 (in Figur 5 nach unten) gegen den ringförmigen Anschlag 32 des Kolbens 2 des Differentialzylinders 1 spannt.

Wie mit Bezug zu Figur 4 erläutert, wird im geklemmten Zustand der beiden (in Figur 5 nicht gezeigten) Flansche 11 der Kolben 30 vom Anschlag 32 abgehoben und die Schraubenfeder 34 gespannt. Damit ist über lange Zeit die Elastizität des Untersee-Klemmzylinders realisiert, indem die elastische Kraft der Schraubenfeder 34 über den Kolben 30 und weiter über die im Kolbenbodenraum 14 eingesperrte Druckflüssigkeit und über den Kolben 2 zur Klemmung übertragen wird.

Beim Beispiel gemäß Figur 6 ist die mechanische Feder dadurch realisiert, dass in der Verlängerung 14a des Kolbenbodenraums 14 die Wand 134 des Differentialzylinders 1 mechanisch bzw. konstruktiv geschwächt ist, so dass sie sich unter dem dauerhaft anliegenden Arbeitsdruck der Druckflüssigkeit im gespannten Zustand der Untersee-Klammer elastisch ausdehnt. Genauer gesagt vergrößert sich der Innendurchmesser d₁ der entspannten elastischen Wand 134 im geklemmten Zustand auf den gespannten Innendurchmesser d₂.

Damit wird die elastische Kraft der gespannten Wand 134 über die Druckflüssigkeit der Verlängerung 14a und des Kolbenbodenraums 14 und über den Kolben 2 zur Klemmung übertragen.

Die mechanisch bzw. konstruktiv geschwächte Wand 134 ist in Richtung der Längsachse 8 des Untersee-Klemmzylinders beabstandet zum Hubweg s angeordnet, damit der Zylindermantel, an dem der Kolben 2 entlangfährt, nicht (ebenfalls) signifikant elastisch geweitet wird.

Offenbart ist ein hydraulischer Untersee-Klemmzylinder für die Flansche zweier zu verbindender Fluid-Leitungen. Die Klammerung und Klemmung der beiden Flansche erfolgt über einen Hydraulikzylinder des Untersee-Klemmzylinders, der ein Differenzialzylinder ist. Eine lang dauernde Elastizität der Klemmung wird dadurch erreicht, dass die Elastizität durch die im Zylinderraum eingesperrte Druckflüssigkeit direkt an den Kolben und an die Kolbenstange des Hydraulikzylinders übertragbar ist. Bei einem Beispiel wird die Elastizität von einem zusätzlichen Volumen der in Grenzen kompressiblen Druckflüssigkeit selbst erzeugt. Bei anderen Beispielen wird als elastisches Element ein Gas oder eine Spiralfeder eingesetzt, dessen bzw. deren Elastizität über ein Trennelement (Kolben, Membran) an die Druckflüssigkeit übertragen wird. Besonders bauraumsparend ist es, wenn das elastische Element und das Trennelement im Kolben und in der Kolbenstange des Hydraulikzylinders aufgenommen sind.

## Patentansprüche

1. Hydraulischer Untersee-Klemmzylinder mit einem Differenzialzylinder (1), dessen Kolbenbodenraum (14) zum Aufbringen einer Klemmkraft mit Druckflüssigkeit befüllbar ist, wobei der Kolbenbodenraum (14) von einem Kolben (2) begrenzt ist, an dem eine Kolbenstange (4) befestigt ist, und mit einer Elastizität für eine dauernde Klemmkrafthaltung, wobei die Elastizität durch die im Kolbenbodenraum (14) eingesperrte Druckflüssigkeit von dieser über den Kolben (2) direkt an die Kolbenstange (4) übertragbar ist, wobei die Elastizität mittels einer Fluidfeder erzeugt ist, die durch ein mit einem Gas gefülltes Volumen (28) gebildet ist, **dadurch gekennzeichnet, dass** das Volumen (28) in einem Blasenspeicher (26) angeordnet ist, der mit dem Kolbenbodenraum (14) verbunden ist, und der in einer Verlängerung (14a) des Kolbenbodenraums (14) aufgenommen ist.

2. Untersee-Klemmzylinder nach Anspruch 1, wobei der Kolben (2) zwei Dichtungen (16, 18) aufweist.

3. Untersee-Klemmzylinder nach Anspruch 1, wobei die Druckflüssigkeit mittels zweier zueinander in Reihe geschalteter als Sitzventile (20) ausgebildeter Sperrventile im Kolbenbodenraum (14) eingesperrt ist.

## Claims

1. Hydraulic submarine clamping cylinder, having a differential cylinder (1) whose piston head space (14) can be filled with pressurized liquid for the purpose of applying a clamping force, wherein the piston head space (14) is delimited by a piston (2), to which a piston rod (4) is fastened, and having elasticity for long-term maintenance of a clamping force, wherein the elasticity can be transmitted by the pressurized liquid, confined within the piston head space, from there directly to the piston rod (4) via the piston (2), wherein the elasticity is generated by means of a fluid spring which is formed by a volume (28) filled with a gas, **characterized in that** the volume (28) is arranged in a bladder accumulator (26) which is connected to the piston head space (14) and which is received in an extension (14a) of the piston head space (14).

2. Submarine clamping cylinder according to Claim 1, wherein the piston (2) has two seals (16, 18).

3. Submarine clamping cylinder according to Claim 1, wherein the pressurized liquid is confined within the piston head space (14) by means of two blocking valves which are connected in series with one another and which are in the form of seat valves (20) .

## Revendications

1. Vérin de serrage sous-marin hydraulique, comprenant un vérin différentiel (1) dont l'espace de fond de piston (14) peut être rempli d'un liquide sous pression pour appliquer une force de serrage, l'espace de fond de piston (14) étant délimité par un piston (2) auquel est fixée une tige de piston (4), et présentant de l'élasticité pour un maintien de force de serrage permanent, dans lequel l'élasticité peut être transmise par le liquide sous pression enfermé dans l'espace de fond de piston par l'intermédiaire du piston (2) directement à la tige de piston (4), l'élasticité étant générée au moyen d'un ressort à fluide qui est formé par un volume (28) rempli de gaz,
**caractérisé en ce que** le volume (28) est disposé dans un accumulateur à vessie (26) qui est relié à l'espace de fond de piston (14) et qui est reçu dans un prolongement (14a) de l'espace de fond de piston (14).

2. Vérin de serrage sous-marin selon la revendication 1, dans lequel le piston (2) présente deux joints d'étanchéité (16, 18).

3. Vérin de serrage sous-marin selon la revendication 1, dans lequel le liquide sous pression est enfermé au moyen de deux soupapes d'arrêt, connectées en série et réalisées sous forme de soupapes à siège (20), dans l'espace de fond de piston (14).
